# EUROPEAN PATENT APPLICATION

(11) **EP 3 018 117 A1**
(43) Date of publication of application: **11.05.2016**
(21) Application number: 14819239.6
(22) Date of filing: 30.06.2014
(51) Int. Cl.: C07C 51/42, A23L 33/10, A23L 33/15, A23L 2/42, A23L 2/52, B65D 81/30, C07C 65/11, C07C 46/10, C07C 50/14

(54) **METHOD FOR IMPROVING PHOTOSTABILITY OF FOOD, BEVERAGE OR THE LIKE**

(30) Priority: 01.07.2013 JP 2013137861
(71) Applicant: Meiji Co., Ltd., Tokyo 136-8908 (JP)
(72) Inventor: SAKATA, Tadashi, Odawara-shi Kanagawa 250-0862 (JP); KAMIYAMA, Tomonori, Odawara-shi Kanagawa 250-0862 (JP); YAMAMOTO, Fuyuko, Odawara-shi Kanagawa 250-0862 (JP); HORIE, Ikuo, Odawara-shi Kanagawa 250-0862 (JP)
(74) Representative: Hoffmann Eitle
(86) International application number: PCT/JP2014/067443
(87) International publication number: WO 2015/002151

(57) **Abstract**

Provided is a method for stabilizing DHNA or a vitamin contained in a food, a beverage and or like under an environment which can be subjected to natural light or artificial light, e.g. a transparent container, without requiring the use of a container or a packaged article each having a high light-blocking property. Particularly provided is a method for stabilizing DHNA or a virtamin, in which only ultraviolet ray is blocked under an environment which can be subjected to natural light and/or artificial light. Also provided is a method for stabilizing DHNA or a vitamin, in which only ultraviolet ray is blocked by a colorless and transparent film having an ultraviolet ray blocking function. Still also provided is a method for stabilizing DHNA or a vitamin, in which only ultraviolet ray is blocked by a lighting having an ultraviolet ray blocking function.

## Description

### Technical Field

The present invention relates to a method for improving a photostability of food and beverage products, specifically to a method for stabilizing 1,4-dihydroxy-2-naphthoic acid (hereinafter, also referred to as "DHNA"). More specifically, the invention relates to a method for stabilizing DHNA or vitamins without completely shielding DHNA-containing food and beverage products from light in an environment with potential for exposure to natural light or artificial light (under light irradiation).

### Background Art

The applicant of the present invention isolated Propionibacterium freudenreichii (for example, Propionibacterium freudenreichii ET-3) from Emmental cheese, and demonstrated that a fermented milk whey of Propionibacterium freudenreichii has a bifidogenic growth stimulating function. Such fermented milk whey of Propionibacterium freudenreichii have been studied as a functional material that shows an intestines regulating function. Then, the studies have identified DHNA as a major component of the bifidogenic growth stimulating function from a fermented milk whey of Propionibacterium freudenreichii.

The applicant of the present invention cultured Propionibacterium freudenreichii to make DHNA in large quantities to produce, and demonstrated that DHNA or salts thereof fractionated from the culture of Propionibacterium freudenreichii have a variety of functions (effects). For example, it is reported that DHNA or salts thereof has a function to improve an intestinal flora and to alleviate abdominal discomfort in patients with milk intolerance, and are useful as a preventive or therapeutic agent for metabolic bone diseases with their effect to promote differentiation and function development of osteoblasts, and to inhibit formation of osteoclasts (PTL 1).

On the other hand, DHNA is known to have a poor photostability. There would be a possibility that, when DHNA is mixed in food and beverage products to expect the foregoing functions (effects), and then is stored (preserved) in places such as storage or displayed in store shelves under predetermined light irradiation, DHNA may photodecompose in the food and beverage products, so that the DHNA concentration (content) decreases, and the amount of the active component DHNA in the products becomes greatly smaller. There would be a possibility that in this case, the foregoing functions (effects) may no longer be obtained when consumers consume the food and beverage products.

PTL 1 describes that for the influence of light on DHNA, a container or a packaging material having a high light shielding property for products containing DHNA.

It is known that vitamin K has a similar structure to DHNA, and has poor photostability. PTL 2 proposes a method for improving the photostability of vitamin K by adding a coloring agent to a fat-soluble drug-containing composition (content) containing vitamin K.

PTL 3 proposes a method for stabilizing the vitamins in a drink (content) contained in a transparent container with vitamins having a poor light resistance such as vitamin K by coloring brown, or fully covering the container with a light shielding label.

### Citation List

### Patent Literature

PTL 1: Japanese Patent No. 4579158
PTL 2: JP-A-2000-007583
PTL 3: JP-A-2006-262735

### Summary of Invention

### Problem that the Invention is to Solve

In food and beverages, a visually-appealing appearance is an important element as a strategy of appealing an attraction of the product (product power) to consumers. It would be highly advantageous that the content of a container or likes is visible and confirmable, and the contents having a natural color are charged.

However, when a nontransparent container or packaging material, or a nontransparent label (film), which have a high light shielding property is used as in PTL 1 and 3, there is a defect that the contents of the container or likes is not is visible and confirmable, and the consumer's willingness to buy is lost.

When the contents are colored as in PTL 2 and 3, certain levels of color density are needed to achieve the desired photostability. In such case, there is a defect that there is a high possibility that the product having a unnatural color often give a bad impression to consumers, and still the consumer's willingness to buy is lost.

On the other hand, when light is not shielded unlike in PTL 1 to 3, the product needs to be kept in cold dark place places when being not only stored (preserved) in places such as storage but displayed in store shelves. This increases the overall procedural and cost burden by making the handling of the product complicated, or by necessitating the product to be displayed in places that are not suited for display.

The present invention has been completed in view of the foregoing problems of food and beverage products containing DHNA or vitamins, and food and beverage products in which DHNA or vitamins are mixed. It is an object of the present invention to provide a method for stabilizing DHNA or vitamins in an environment with potential for exposure to natural light or artificial light, for example, such as in a colorless transparent container or packaging material, without having to use a nontransparent container or packaging material, or film having a high light shielding property.

### Means for Resolving Problem

In order to achieve the foregoing object, the present inventors conducted a preservation test for photostability, aimed at finding a major cause of the instability at a preservation of DHNA. The test confirmed that the DHNA concentration decreases and the DHNA photostability suffers under predetermined light irradiation. At the same time, significant involvement of ultraviolet light was also found in the DHNA decreasing phenomenon.

From these novel findings, the present inventors found that DHNA can be effectively stabilized, and decrease of DHNA concentration can be reliably inhibited by blocking only ultraviolet rays, even under predetermined light irradiation (under a light environment). The present invention was completed on the basis of this finding.

Specifically, the present invention relate to the following (1) to (9).
(1) A method for stabilizing 1,4-dihydroxy-2-naphthoic acid and/or vitamins,
   the method comprising blocking only ultraviolet rays in an environment with potential for exposure to natural light and/or artificial light.
(2) The method according to (1) above, wherein ultraviolet rays are blocked (light-shielded) with a container or packaging material, and/or a film, which are colorless transparent and have an ultraviolet blocking function.
(3) The method according to (1) or (2) above, wherein ultraviolet rays are blocked (light-shielded) with a light having an ultraviolet blocking function.
(4) The method according to any one of (1) to (3) above, wherein the 1,4-dihydroxy-2-naphthoic acid and/or vitamins are contained in food and beverages.
(5) A method for producing a food or beverage product,
   the method comprising charging food or beverage into a colorless transparent container or packaging material having an ultraviolet blocking function, and/or a container or a packaging material covered with a colorless transparent film having an ultraviolet blocking function.
(6) A food or beverage product, which is charged in a colorless transparent container or packaging material having an ultraviolet blocking function, and/or a container or a packaging material covered with a colorless transparent film having an ultraviolet blocking function.
(7) A use of a colorless transparent container or packaging material and/or film having an ultraviolet blocking function for a stabilization of 1,4-dihydroxy-2-naphthoic acid and/or vitamins in an environment with potential for exposure to natural light and/or artificial light.
(8) A use of a light having an ultraviolet blocking function for a stabilization of 1,4-dihydroxy-2-naphthoic acid and/or vitamins.
(9) The use according to (7) or (8), wherein the 1,4-dihydroxy-2-naphthoic acid and/or vitamins are contained in food and beverages.

### Advantageous Effects of Invention

The present invention enables providing a method for stabilizing DHNA and/or vitamins in food and beverage products containing DHNA and/or vitamins, or food and beverage products in which DHNA and/or vitamins are mixed, without having to use a container or a packaging material having a high light-shielding property, by blocking (light-shielding) only ultraviolet rays in an environment with potential for exposure to natural light and/or artificial light such as in a colorless transparent container or packaging material.

### Modes for Carrying Out the Invention

The present invention is described below in detail. As described above, the method for stabilizing DHNA and/or vitamins according to the present invention blocks (light shields) only ultraviolet rays in an environment with potential for exposure to natural light and/or artificial light, without using a nontransparent container or packaging material, and/or film, which have a high light-shielding property.

In the present invention, "in an environment with potential for exposure to natural light and/or artificial light" means an environment or a space with potential for exposure to an illuminance that is sufficient for human vision to distinguish objects. The illuminance is not particularly limited, and is 200 to 10000 lux, preferably 500 to 5000 lux, more preferably 1000 to 3000 lux, particularly preferably 2000 lux.

In the present invention, "in an environment with potential for exposure to natural light and/or artificial light" also means a condition in which a DHNA- or vitamin-containing food and beverage product under the foregoing illuminance is not covered with a nontransparent container or packaging material, and/or film, which have a high light-shielding property (light-shielding).

In the present invention, "natural light and/or artificial light" is not particularly limited, and may be, for example, light from a range of light sources used in the everyday living environment or space, including, for example, sunlight, incandescent lamps, and fluorescent lamps, and LEDs.

In the present invention, "ultraviolet rays" means natural light and/or artificial light of 10 nm to 400 nm wavelengths.

Ultraviolet rays may be blocked (shielded) by using known methods, including, for example, a method in which a food and beverage product containing DHNA and/or vitamins is charged into a colorless transparent container or packaging material having an ultraviolet blocking function, and a method in which a colorless transparent film having an ultraviolet blocking function covers a container or a packaging material of food and beverage products containing DHNA and/or vitamins.

In another method, for example, a light having an ultraviolet blocking function is used in places where food and beverage products containing DHNA and/or vitamins are stored (preserved), such as in storage, or in places where food and beverage products containing DHNA and/or vitamins are displayed and sold, such as in stores.

Specific examples of such methods include a method that uses a fluorescent lamp with an ultraviolet cutting function [for example, a UV-cutting High-Frequency Fluorescent Lamp; "FHF45SEL-V" manufactured by Hitachi, Ltd.], and a method that uses a light provided with a UV cut cover [for example, "Banguard" manufactured by Nakagawa Chemical Co. Ltd.].

In the present invention, it is preferable that DHNA and/or vitamins are contained in food and beverages, and that DHNA and/or vitamins are mixed in food and beverages. More preferably, DHNA is contained in food and beverages, and DHNA is mixed in food and beverages.

In the present invention, "vitamins" means, for example, vitamins with poor light resistance, such as vitamin K. Preferred examples include vitamin K.

In the present invention, "food and beverages" means drinkable food and beverages, including, for example, drinks including milk/dairy products, lactobacillus beverages, fermented milk, soymilk, vegetable juice, fruit juice (including food and beverages containing these), tea beverages such as green tea, red tea, and oolong tea, coffee beverages, cocoa beverages, food and beverages containing amino acids, peptides, and proteins (particularly, sports drinks suited as water or nutritional supplements during exercise), nutritional drinks with an enhanced nutritional component intended to promote health, soft drinks such as carbonated drinks, alcoholic beverages, and soup products such as soup, miso soup, and clear soup.

Other examples thereof include processed food products such as jelly-like, gelatinous, thickened, and freeze-dried foods; dairy products such as yogurt, cheese, cream, butter, icecream, and formula milk; pastes such as margarine, spread, and jam; desserts such as jelly, pudding, and Bavarian cream; seasonings such as mayonnaise, and dressing; liquid food; and enteric nutrient.

Various useful functions (effects) of DHNA and/or vitamins can be expected upon ingesting food and beverage products containing DHNA and/or vitamins, or food and beverage products in which DHNA and/or vitamins are mixed.

The method for stabilizing DHNA and/or vitamins according to the present invention is also suited for long-term preservation of food and beverages, and is therefore also applicable to not only yogurt, which involves a short fermentation time, but long-aged cheese. The method is also applicable to nutritional foods including functional foods such as food for specified health uses, and food with health claims.

The method for producing food and beverage product according to the present invention includes the step of charging food or beverages into a colorless transparent container or packaging material having an ultraviolet blocking function, and/or a container or a packaging material covered with a colorless transparent film having an ultraviolet blocking function. Preferably, the food and beverages contain DHNA and/or vitamins (mixed with DHNA and/or vitamins).

The DHNA- and/or vitamin-containing food and beverages of the present invention are charged in a colorless transparent container or packaging material having an ultraviolet blocking function, and/or a container or a packaging material covered with a colorless transparent film having an ultraviolet blocking function. Preferably, the food and beverages contain DHNA or vitamins (mixed with DHNA or vitamins).

### Examples

The present invention is described below in greater detail using the test results of Examples and Comparative Examples according to the present invention. It should be noted that the present invention is not limited by the following Examples.

### <Test Example 1>

### (A-1) Test Sample

A lactobacillus beverage was prepared (produced) in the formulation shown in Table 1, and tested for photostability in a preservation test. The preservation conditions set for the preservation test are given below.

**[Table 1]**

| Raw materials | Proportion [mass%] |
|---|---|
| Fermented milk (manufactured by Meiji Co. Ltd.) | 35.000 |
| Pectin (manufactured by Danisco, Ltd.) | 0.310 |
| Sugars | 14.790 |
| Caramel | 0.033 |
| Lactic acid [50 (v/v)%] | 0.100 |
| Sodium citrate | 0.050 |
| Vitamins | 0.165 |
| Fermented milk whey of Propionibacterium freudenreichii (DHNA concentration: 64.8 µg/g) | 0.230 |
| Water | 49.322 |
| Total | 100.000 |

### (A-2) Test Method

In a preservation test of photostability, the initial DHNA concentration (content) was measured as a initial value at the start of the test (day 0), and three preservation conditions were set, as follows. The lactobacillus beverage was stored after being charged into separate containers (180 mL each), and each lactobacillus beverage (each sample) was measured for DHNA concentration after 21 days and 27 days. The DHNA concentration was measured using HPLC, and the DHNA concentration per sample (180 mL) of lactobacillus beverage was calculated.

### (Preservation Conditions)

[1-1] Container: transparent polystyrene container; preservation temperature: 10°C; Dark place (Comparative Example 1)
[1-2] Container: transparent polystyrene container; preservation temperature: 10°C; illuminance: 2000 lux (UV cut cover was used) (Example 1)
[1-3] Container: transparent polystyrene container with a light shielding shrink film; preservation temperature: 10°C; illuminance: 2000 lux (UV cut cover was used) (Example 2)

### (HPLC Analysis Conditions)

Four milliliters of the test sample (lactobacillus beverage) was collected into a plastic tube (15-mL volume), and 8 mL of a 0.1 (w/v)% ascorbic acid-90(v/v)% methanol solution was added, stirred, and mixed with the sample. The plastic tube was centrifuged [Hitachi Compact Cooled Centrifuge "CF7D2" manufactured by Hitachi Kogyo KK; room temperature (about 20°C)] at 3000 rpm for 5 min (1870 x G), and then the supernatant was transferred to a different plastic tube (15-mL volume). The liquid was stirred and mixed after adding 4 mL of a 0.1 (w/v)% ascorbic acid solution.

The total amount of the stirred and mixed solution was passed through a solid phase extraction column [Oasis HLB Column manufacture by Waters Japan KK; resin: 150 mg; column size: 6 cc; resin particle size: 60 µm] under a load. Prior to this procedure, the solid phase extraction column was conditioned by passing 6 mL of methanol, and 6 mL of a 0.1 (w/v)% sodium ascorbate solution, in this order.

Next, the solid phase extraction column was washed by passing 6 mL of a 0.1 (w/v)% sodium ascorbate solution twice, 6 mL of a 0.1 (w/v)% ascorbic acid solution, and 6 mL of a 0.1 (w/v)% ascorbic acid-70 (v/v)% methanol solution, in this order.

The solid phase extraction column was eluted by passing 6 mL of a 0.1 (w/v)% sodium ascorbate-90 (v/v)% methanol solution, and then the eluate was collected into a glass centrifuge tube (10-mL volume).

The total amount of the eluate was completely dried at 45°C under a stream of nitrogen gas. The dried product was dissolved by adding 0.5 mL of a 0.1 (w/v)% ascorbic acid-50 (v/v)% methanol solution. The solution was filtered through a PTFE filter having a pore size of 0.45 µm, and the filtrate (permeate) was used as a test solution for HPLC analysis.

HPLC analysis was performed under the following conditions.
Detection wavelength: UV 254 nm
Column: CAPCELL PAK C18 MGII (2.0 x 100 mm, 3 µm), manufactured by Shiseido Co., Ltd.
Column temperature: 45°C
Mobile phase: A 50 mg/L dithiothreitol solution prepared by adding and dissolving dithiothreitol in a mixture of methanol, water, and acetic acid (50:49:1)
Flow rate: 0.2 mL/min
Injected amount of sample solution: 5 µL
HPLC Apparatus: 1200 series manufactured by Agilent Technologies

Separately, a DHNA standard product (manufacture by Sigma Co., Ltd.) was dissolved in a mobile phase for HPLC analysis to prepare solutions with DHNA concentrations of 0.25 µg/mL, 0.5 µg/mL, 1.0 µg/mL, and 1.5 µg/mL. The solutions were each analyzed by HPLC in the same manner described above, and a standard curve was created. The DHNA concentration (content) in the test sample (lactobacillus beverage) was then quantified.

### (A-3) Test Results

Table 2 presents the results of the DHNA concentration (unit: µg/180 mL) measurements for the test samples (lactobacillus beverage).

**[Table 2]**

| Preservation conditions | DHNA concentration (µg/180 mL) | | |
|---|---|---|---|
| | Preservation time (days) | | |
| | 0 | 21 | 27 |
| [1-1] | 23.8 | 22.9 | 23.4 |
| [1-2] | 23.8 | 20.9 | 21.4 |
| [1-3] | 23.8 | 22.0 | 22.7 |

In Test Example 1, the DHNA concentration hardly decreased in the test sample preserved (stored) in the dark place for 27 days (preservation condition [1-1]). There was also hardly any decrease of DHNA concentration in samples using a light using a UV cut cover, specifically in the test sample preserved under light (illuminance: 2000 lux) for 27 days in a transparent polystyrene container without a light shielding shrink film (with the content seen through the container) (preservation condition [1-2]), and in the test sample preserved under light (illuminance: 2000 lux) for 27 days in a transparent polystyrene container with a light shielding shrink film (preservation condition [1-3]).

### <Test Example 2>

### (B-1) Test Sample

A supernatant of a whey culture of Propionibacterium freudenreichii was mixed in 0.6 mass% into a lactobacillus beverage ("Meiji Bulgaria *Katsuryoku Sukkiri* Drinkable Yogurt" manufactured by Meiji Co., Ltd.) to prepare a test sample (lactobacillus beverage). The lactobacillus beverage was then tested for photostability in a preservation test. The preservation conditions set for the preservation test are given below. The whey culture supernatant had a DHNA concentration of 8.66 µg/mL.

### (B-2) Test Method

In a preservation test of photostability, the initial DHNA concentration (content) was measured as an initial value at the start of the test (day 0), and four preservation conditions were set, as follows. The lactobacillus beverage was stored after being charged into separate containers (180 mL each), and each lactobacillus beverage (each sample) was measured for DHNA concentration after 7, 14, 21, and 27 days. The DHNA concentration was measured using HPLC, and the DHNA concentration per sample (180 mL) of lactobacillus beverage was calculated, in the same manner as in Test Example 1.

### (Preservation Conditions)

[2-1] Container: transparent polystyrene container; preservation temperature: 10°C; dark place (Comparative Example 2)
[2-2] Container: transparent polystyrene container; preservation temperature: 5°C; illuminance: 2000 lux (UV cut cover was not used) (Comparative Example 3)
[2-3] Container: clouded polystyrene container with titanium oxide; preservation temperature: 10°C; dark place (Comparative Example 4)
[2-4] Container: clouded polystyrene with titanium oxide; preservation temperature: 5°C; illuminance: 2000 lux (UV cut cover was not used) (Comparative Example 5)

### (B-3) Test Results

Table 3 presents the results of the DHNA concentration (unit: µg/180 mL) measurements for the test samples (lactobacillus beverage).

**[Table 3]**

| Preservation condition | DHNA concentration (µg/180 mL) | | | | |
|---|---|---|---|---|---|
| | Preservation time (days) | | | | |
| | 0 | 7 | 14 | 21 | 27 |
| [2-1] | 7.22 | 7.54 | 7.45 | 7.42 | 6.84 |
| [2-2] | 7.22 | 7.04 | 6.43 | | 3.94 |
| [2-3] | 7.22 | 7.24 | 7.47 | 7.40 | 6.70 |
| [2-4] | 7.22 | 6.84 | 6.53 | | 4.10 |

In Test Example 2, the DHNA concentration hardly decreased in the test sample preserved (stored) in the dark place for 27 days in a transparent polystyrene container (with the content seen through the container) (preservation condition [2-1]), and in the test sample preserved in the dark place for 27 days in a clouded polystyrene container with titanium oxide (preservation condition [2-3]).

However, the DHNA concentration notably decreased when a light with no UV cut cover was used, specifically in the test sample preserved under light (illuminance: 2000 lux) for 27 days in a transparent polystyrene container (with the content seen through the container) (preservation condition [2-2]), and in the test sample preserved under light (illuminance: 2000 lux) for 27 days in a clouded polystyrene container with titanium oxide (preservation condition [2-4]).

As demonstrated in Test Example 1, the food and beverages preserved under light (illuminance: 2000 lux) and in the dark place had the same levels of DHNA photostability when a light with a UV cut cover was used (preservation conditions [1-2] and [1-3]), despite that the contents were seen through the container of the food and beverage.

On the other hand, when a light with no UV cut cover was used (preservation conditions [2-2] and [2-4]), the food and beverages preserved under light (illuminance: 2000 lux) did not have the same levels of DHNA photostability obtained in the dark place, as demonstrated in Test Example 2. These test results showed that blocking (shielding) ultraviolet rays has the effect to improve DHNA photostability.

### Industrial Applicability

The DHNA and/or vitamins in DHNA- and/or vitamin-containing food and beverage products can be stabilized by blocking (light-shielding) only ultraviolet rays in an environment with potential for exposure to natural light and/or artificial light such as in a colorless transparent container or packaging material, without having to use a container or a packaging material having a high light-shielding property.

While there has been described a certain embodiment of the invention, it will be apparent to a skilled person that various modifications may be made thereto within the intent and the scope of the present invention. This application is based on Japanese Patent Application No. 2013-137861 filed July 1, 2013, the entire content of which is hereby incorporated by reference.

## Claims

1. A method for stabilizing 1,4-dihydroxy-2-naphthoic acid and/or vitamins,
the method comprising blocking only ultraviolet rays in an environment with potential for exposure to natural light and/or artificial light.

2. The method according to claim 1, wherein ultraviolet rays are blocked (light-shielded) with a container or packaging material, and/or a film, which are colorless transparent and have an ultraviolet blocking function.

3. The method according to claim 1 or 2, wherein ultraviolet rays are blocked (light-shielded) with a light having an ultraviolet blocking function.

4. The method according to any one of claims 1 to 3, wherein the 1,4-dihydroxy-2-naphthoic acid and/or vitamins are contained in food and beverages.

5. A method for producing a food or beverage product,
the method comprising charging food or beverage into a colorless transparent container or packaging material having an ultraviolet blocking function, and/or a container or a packaging material covered with a colorless transparent film having an ultraviolet blocking function.

6. A food or beverage product, which is charged in a colorless transparent container or packaging material having an ultraviolet blocking function, and/or a container or a packaging material covered with a colorless transparent film having an ultraviolet blocking function.
